# EUROPEAN PATENT APPLICATION

(11) **EP 2 175 606 A1**
(43) Date of publication of application: **14.04.2010**
(21) Application number: 08800832.1
(22) Date of filing: 10.09.2008
(51) Int. Cl.: H04L 29/06

(54) **A METHOD, AN EXCHANGE AND A DEVICE FOR CONVERSATION HANDOVER BETWEEN THE TERMINALS**

(30) Priority: 11.09.2007 CN 200710076952
(71) Applicant: Huawei Technologies Co., Ltd., Longgang District Shenzhen 518129 (CN)
(72) Inventor: ZOU, Zhuyan, Guangdong 518129 (CN); HUANG, Shansong, Guangdong 518129 (CN)
(74) Representative: Thun, Clemens
(86) International application number: PCT/CN2008/072320
(87) International publication number: WO 2009/033423

(57) **Abstract**

There provides a method, switch and apparatus for switching a session among terminals. It is not necessary to interrupt a user's current call when switching the session of the user among multiple terminals. During a session between a first terminal and a counterpart terminal, if a switching signaling is received from a second terminal which is not originally involved in the session, the session is switched to be between the second terminal and the counterpart terminal. During the session of the first terminal, if a signaling indicating on-hook is received from the first terminal, the session is maintained for a predetermined period. If a switching signaling is received from the second terminal during the period of maintaining the session, the session is switched to be between the second terminal and the counterpart terminal.

## Description

### FIELD OF THE INVENTION

The present invention relates to communication, and more particularly, to a method for switching a session among terminals, and a switch and apparatus employing the method for switching a session.

### BACKGROUND

In practice, there may be scenarios that when a user A is communicating by a first terminal with another user B, the user A wants to use a second terminal to continue the communication with the user B for some reasons, then it is needed to switch the first terminal to the second terminal for the communication. For example, (1) a user is having a call in an office, at this time the user has to go to a meeting room for a meeting while the user has to go on the call with the counterpart, then the user needs to use the phone in the meeting room to go on the call, in other words, the user needs to switch the current call from the phone in the office to the phone in the meeting room; (2) the user cannot disclose some confidential information, such as trade secrets, credit card passwords, etc., by the current phone in the office, and needs to use a cellphone to go on the call with the counterpart, then the user needs to switch the current call from the phone in the office to the cellphone; (3) when the terminal's communication capabilities are insufficient, it is needed to switch to a terminal with sufficient functions to go on the call.

At present, in order to switch terminals for the call, the employed technical solution is as follows: firstly the current call is terminated, i.e., the communication between the first terminal and the counterpart terminal is terminated, and the communication between the second terminal and the counterpart terminal is established to go on the call. Referring to the above mentioned first example, a user is having a call in the office, but at this time the user has to go to the meeting room for a meeting while the user has to go on the call with the counterpart, then the user needs to use the phone in the meeting room to go on the call. With the existing technology, the user may terminate the call in the office, and then establish a new connection with the counterpart by the phone in the meeting room, and then go on the call after the establishment of the new connection.

However, the existing technical solution needs to interrupt the current call, and brings inconvenience to the user.

### SUMMARY

The main technical problem to be resolved by embodiments of the present invention is to provide a method, switch and apparatus for switching a session among terminals, in order not to interrupt the user's current call when switching the user's session among multiple terminals.

To resovle above technical problem, an embodiment of the present invention provides a method for switching a session among terminals, the method includes the following steps:

receiving, during a session between a first terminal and a counterpart terminal, a switching signaling from a second terminal which is not in the session;

switching the session between the first terminal and the counterpart terminal into a session between the second terminal and the counterpart terminal.

An embodiment of the present invention further provides a switch, the switch includes:

a switching unit adapted to switch a session;

a first determining unit adapted to determine whether receiving, during a process of a session between a first terminal and a counterpart terminal, a switching signaling from a second terminal which is not involved in the session, and instruct the switching unit to switch the session between the first terminal and the counterpart terminal into a session between the second terminal and the counterpart terminal if receiving the switching signaling.

An embodiment of the present invention further provides a switching apparatus, the apparatus includes:

a switching unit adapted to switch a session;

a first determining unit adapted to determine whether receiving, during a process of a session between a first terminal and a counterpart terminal, a switching signaling from a second terminal which is not involved in the session, and instruct the switching unit to switch the session between the first terminal and the counterpart terminal into a session between the second terminal and the counterpart terminal if receiving the switching signaling.

During the process of a session between the first terminal and the counterpart terminal, if a switching signaling is received from the second terminal which originally is not involved in the session, the session is switched to be between the second terminal and the counterpart terminal, so that it is not necessary to interrupt the user's current call when switching the user's session among multiple terminals.

### BRIEF DESCRIPTION OF THE DRAWINGS

Fig.1 is a flow diagram of a method for switching a session among terminals according to an embodiment of the present invention;

Fig.2 is a schematic diagram, in which a first terminal and a second terminal belong to a same switch, for illustrating a method for switching a session among terminals according to an embodiment of the present invention;

Fig.3 is a schematic diagram, in which a first terminal and a second terminal belong to different switches, for illustrating a method for switching a session among terminals according to an embodiment of the present invention;

Fig.4 is a flow diagram of a method for switching a session among terminals according to an embodiment of the present invention;

Fig.5 is a structural diagram of a switch according to an embodiment of the present invention; and

Fig.6 is a structural diagram of a switching apparatus according to an embodiment of the present invention.

### DETAILED DESCRIPTION

In order to make objects, technical solutions and advantages of the present invention more apparent, a further detailed description for the present invention is given below with reference to the accompany drawings and with respect to the embodiments.

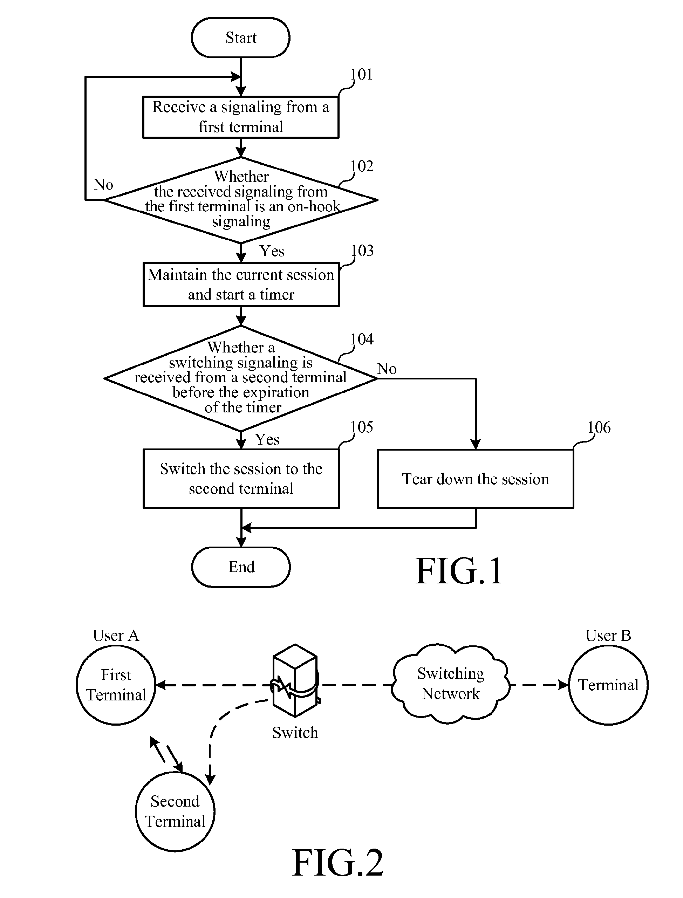

In a method for switching a session among terminals according to an embodiment of the present invention, during a process of a session between a first terminal and a counterpart terminal, if a switching signaling is received from a second terminal which originally is not in the session, the session is switched to be between the second terminal and the counterpart terminal. The specific process flow is shown in Fig.1.

In step 101, a switch receives a signaling from a first terminal during a process of a session between the first terminal and a counterpart terminal.

In step 102, the switch determines whether the received signaling from the first terminal is an on-hook signaling. If the signaling sent from the first terminal is an on-hook signaling, proceeding to step 103, otherwise returning to step 101.

In step 103, the switch temporarily maintains information of the current session and starts a timer. In other words, the session is not torn down temporarily and all information or partial information of the session is maintained, then the timer is started.

In step 104, the switch receives a signaling from a second terminal before the expiration of the timer, and determines whether the received signaling from the second terminal is a switching signaling. If the switch receives the switching signaling from the second terminal before the expiration of the timer, proceeding to step 105, and if the switch does not receive the switching signaling from the second terminal at the time of expiration of the timer, proceeding to step 106.

For a terminal which needs off-hook, such as a stationary phone, an off-hook signaling may be employed as the switching signaling to perform automatic switching without the need of the user to dial other access codes, so as to provide more convenience for the user's operation. For a terminal which needs not off-hook, such as a cellphone, the switching signaling may be a short access number signaling, in such a way it will not bring inconvenience for the user while implementing seamless switching.

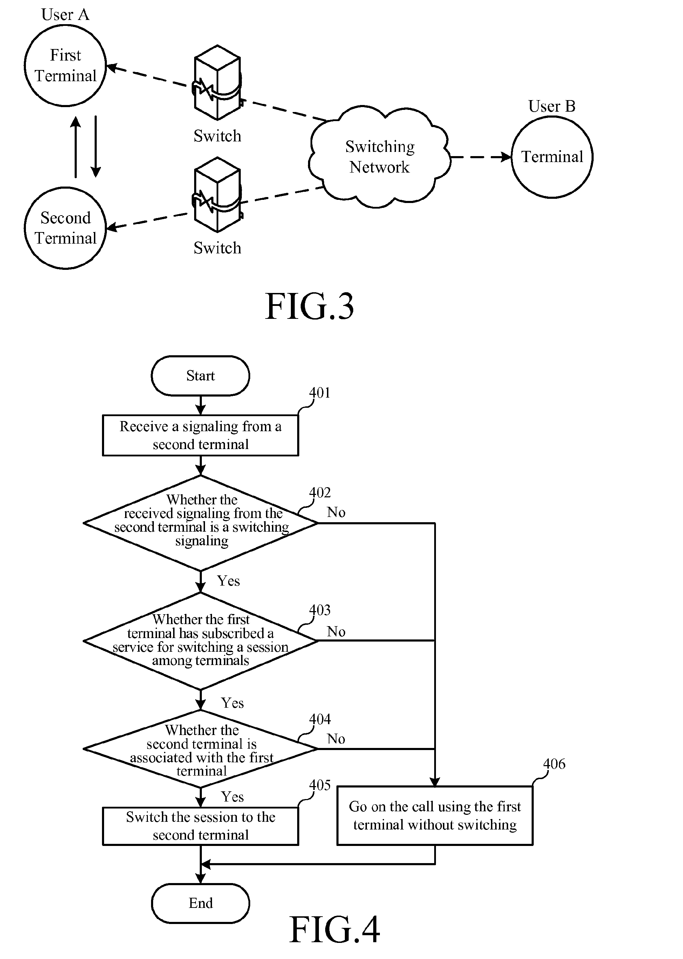

In step 105, the switch switches the session between the first terminal and the counterpart terminal to be between the second terminal and the counterpart terminal. The first terminal and the second terminal may belong to a same switch and may also belong to different switches. For the scenario of the first terminal and the second terminal belonging to the same switch, for example as shown in Fig.2, the switch may modify the information maintained previously for the session, to modify the information of the first terminal into the information of the second terminal, for example, modifying the routing information, destination address, etc. For the scenario of the first terminal and the second terminal belonging to different switches, for example as shown in Fig.3, a first switch to which the first terminal belongs may send the maintained session information to a second switch to which the second terminal belongs, and notify the second switch that the session is switched to be between the the second terminal and the counterpart terminal, so that the second switch controls the session between the second terminal and the counterpart terminal.

After the switching of the session, the user may go on the call by the second terminal, so that it is not necessary to interrupt the user's current session when switching the user's session among multiple terminals, thereby bringing better experience to the user.

In step 106, the switch to which the first terminal belongs does not receive the switching signaling from the second terminal until expiration of the timer, and directly tears down the session between the first terminal and the counterpart terminal.

Therefore, the present embodiment provides a seamless call switching method. Here the term "seamless" refers to: the session information, such as signaling stream, media stream, account, authentication, etc., may not be lost during the switching process of the call, i.e., all of the session information is maintained; or only part of the information is guaranteed not to be lost as necessary, i.e., part of the session information is maintained.

It should be noted that, in the present embodiment, the first terminal and the second terminal, which are involved in the switching process, each accesses the switch to which it belongs, and communicates with another terminal though a switching network, here the first terminal and the second terminal may blong to a same switch and may also blong to different switches. Moreover, the user terminal may be a wireless terminal or a wire terminal without any limitation for the type of the user terminal, as long as the user terminal is supported by the switch, for example, the user terminal may be cellphone, stationary phone, soft handset (e.g. personal digital assistant), laptop, personal computer (PC), etc. The switching network in the present embodiment may be Public Switched Telephone Network (PSTN), soft switching network, Global System for Mobile communication (GSM), The Third Generation (3G) or Voice over IP (VoIP) communication network.

An embodiment of a method for switching a session among terminals according to the present invention is similar to the embodiment as shown in Fig.1, the difference lies in that, in the embodiment as shown in Fig.1, if the switch receives a switching signaling from the second terminal during the session maintaining period, the sessson switching is performed immediately, while in the present embodiment, terminals are preset to be associated with the first terminal, and if the switch receives a switching signaling from the second terminal during the session maintaining period, the switch further determines whether the second terminal is associated with the first terminal, and performs the session switching if the second terminal is associated with the first terminal.

There may be one or more terminals which are associated with the first terminal, the information of the associated terminals may be stored in the switch to which the first terminal belongs, and may also be stored in other storage devices, from which the switch to which the first terminal belongs may obtain the information of the associated terminals. For example, the terminals associated with the first terminal may be a second terminal and a third terminal as shown in table 1.

**Table 1**

| user | terminal | associated terminal | |
|---|---|---|---|
| user A | first terminal | second terminal | third terminal |
| user B | 00000001 | 22222222222 | |
| user C | 00000002 | 00000004 | 00000000 |
| user D | 00000003 | 00000005 | |
| user X | ··· | ··· | ··· |

An embodiment of a method for switching a session among terminals according to the present invention is different from the embodiment as shown in Fig.1 in that, in the embodiment as shown in Fig.1, the switch performs the maintenance of the session directly after receiving an on-hook signaling from the first terminal, while in the present embodiment, the switch firstly determines whether the first terminal has subscribed for a service for switching a session among terminals after receiving the on-hook signaling from the first terminal, performs the maintenance of the session and starts the timer if the first terminal has subscribed for the service for switching a session among terminals, and tears down the session directly if the first terminal does not subscribe for the service for switching a session among terminals. Whether the first terminal has subscribed for the service for switching a session among terminals is determined, so that the user is allowed to choose by himself whether the session switching is needed, in such a way improving the customization while guaranting the profits of the operators.

An embodiment of a method for switching a session among terminals according to the present invention is similar to the embodiment as shown in Fig.1, the difference lies in that, in the embodiment as shown in Fig.1, the switching is performed after the first terminal is hooked on, while in the present embodiment, the session switching is performed in the case of the first terminal is not hooked on, i.e., while the first terminal is still in the calling state. The specific process is shown in Fig.4.

In step 401, a switch receives a signaling from a second terminal during a process of a session between a first terminal and a counterpart terminal. It should be noted that, if the first terminal and the second terminal belong to the same switch, the switch may directly receive the signaling from the second terminal, and if the first terminal and the second terminal belong to different switches, the switch may receive the signaling from the second terminal via a switch to which the second terminal belongs.

In step 402, the switch determines whether the received signaling from the second terminal is a switching signaling. If the signaling sent from the second terminal is a switching signaling, proceeding to step 403, otherwise proceeding to step 406.

In step 403, the switch determines whether the first terminal has subscribed for a service for switching a session among terminals. If the first terminal has subscribed for the service for switching a session among terminals, proceeding to step 404, otherwise proceeding to step 406.

In step 404, the switch determines whether the second terminal is associated with the first terminal. It is determined whether the second terminal is associated with the first terminal according to the informaiton of associted terminals stored on the switch to which the first terminal belongs. If the second terminal is associated with the first terminal, proceeding to step 405, otherwise proceeding to step 406.

In step 405, the switch switches the session between the first terminal and the counterpart terminal to be between the second terminal and the counterpart terminal, so as to go on the current call by the second terminal.

In step 406, the switch maintains the session between the first terminal and the counterpart terminal.

In the present embodiment, the user uses the first terminal to carry on the current call, and a switching signaling is originated from the second terminal without the on-hook of the first terminal, then the current call is switched to the second terminal. The present embodiment is particularly suitable for the circumstance that the first terminal is a cellphone for the following reasons, the system tears down the session between the first terminal and the counterpart terminal after the sesion is successfully switched to the second terminal, and if the first terminal is a cellphone, it may enter a standby state without the on-hook operation, and if the first termianl is a stationary phone, the on-hook operation is needed as the busy tone will be always heard without the on-hook operation.

It should be noted that, in the above mentioned method embodiments, the entity which performs respective steps is not limited to the switch. The respective steps may also be performed by another switching apparatus which is independent of the switch. Such switching apparatus may be described in the following embodiments.

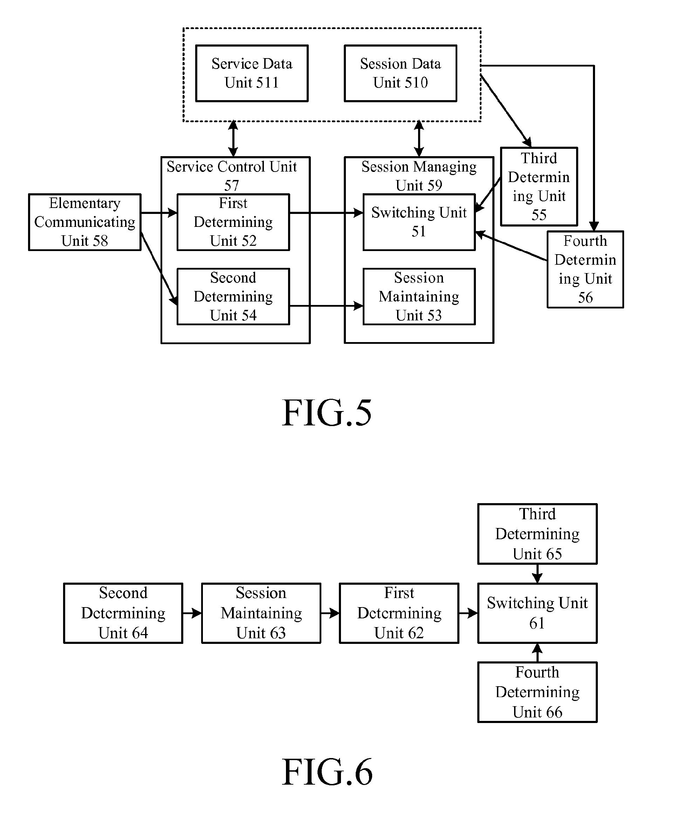

Fig.5 illustrates a structure diagram of a switch according to a specific embodiment of the present invention. The switch includes a switching unit 51 adapted to switch a session, a first determining unit 52 adapted to determine whether receiving, during a process of a session between a first terminal and a counterpart terminal, a switching signaling from a second terminal which is not in the session, and instruct the switching unit to switch the session between the first terminal and the counterpart terminal into a session between the second terminal and the counterpart terminal if receiving the switching signaling. In such a way, it is not necessary to interrupt the user's current session when switching the user's session among multiple terminals. The switching signaling may be an off-hook signaling or an access code signaling.

The switch may further include a session maintaining unit 53 adapted to maintain the session for a predetermined period, a second determining unit 54 adapted to determine whether receiving, during the process of the session between the first terminal and the counterpart terminal, a signaling which indicates on-hook from the first terminal, and instruct the session maintaining unit to maintain the session of the first terminal for the predetermined period if receiving the signaling which indicates on-hook. The first determining unit 52 is further adapted to determine whether receiving, during the session maintaining period, a switching signaling from the second terminal, and instruct the switching unit to switch the session between the first terminal and the counterpart terminal into a session between the second terminal and the counterpart terminal if receiving the switching signaling. A service control unit 57 may include the first determining unit and the second determining unit. The sevice control unit 57 mainly operates to determine whether receiving, during a process of a session between a first terminal and a counterpart terminal, a signaling which indicates on-hook so as to decide whether to maintain the session, and determine whether receiving a switching signaling from a second terminal during the period of maintaining the session so as to decide whether to switch the session.

The swich may further include an elementary communicating unit 58 adapted to receive communication signaling from user side and network side, perform the relay and disconnection of a call. It is the basic function of the switch. In the present embodiment, the elementary communicating unit sends the received signaling information (e.g., the switching signaling, on-hook signaling, and so on) to the service control unit to process.

The switch may further include a session managing unit 59 adapted to perform the creating, tearing down and modifying of the session, and synchronize the processing result of the session to a session data unit. The above mentioned switching unit and session maintaining unit may be included in the session managing unit.

The switch may further include a session data unit 510 adapted to save all sessions existing currently in the system, and the session data unit may be accessed by the service control unit and the session managing unit. Each session includes the following information: user information of both communicating parties, terminal information, current communicating state, signaling information, media information, accounting information, authentication information, and so on.

The switch may further include a service data unit 511 adapted to store service information for the terminal, that is, store informaiotn of one or more other terminals associated with the terminal. The session data unit and the service data unit may be separated from the switch, for example, the session data unit and the service data unit may be located in an independent storage unit and may perform data exchange with the switch.

The switch may further include a third determining unit 55 adapted to determine whether the second terminal is associated with the first terminal according to the terminal information stored in the service data unit. The switching unit 51 switches the session between the first terminal and the counterpart terminal into the session between the second terminal and the counterpart terminal when the first determining unit 52 determines the reception of the switching signaling from the second terminal and the third determining unit 55 determines the second terminal is associated with the first terminal.

The switch may further include a fourth determining unit 56 adapted to determine whether the first terminal has subscribed for a service for switching a session among terminals. The switching unit 51 switches the session between the first terminal and the counterpart terminal into the session between the second terminal and the counterpart terminal when the first determining unit 52 determines the reception of the switching signaling from the second terminal and the fourth determining unit 56 determines the first terminal has subscribed for the service for switching a session among terminals.

It should be noted that, the units illustrated in the embodiments are all logic units, and in practical applications, the units may be located at different physical modules or may be located at a same physical module.

Fig. 6 illustrates a structure diagram of a switching apparatus according to a specific embodiment of the present invention. The switching apparatus includes a switching unit 61 adapted to switch a session, a first determining unit 62 adapted to determine whether receiving, during a process of a session between a first terminal and a counterpart terminal, a switching signaling from a second terminal which is not in the session, and instruct the switching unit to switch the session between the first terminal and the counterpart terminal into the session between the second terminal and the counterpart terminal if receiving the switching signaling. The switching signaling may be an off-hook signaling or an access code signaling.

The switching apparatus may further include a session maintaining unit 63 adapted to maintain the session for a predetermined period, a second determining unit 64 adapted to determine whether receiving, during the process of the session between the first terminal and the counterpart terminal, a signaling which indicates on-hook from the first terminal, and instruct the session maintaining unit to maintain the session of the first terminal for the predetermined period if receiving the signaling which indicates on-hook from the first terminal. The first determining unit 62 is further adapted to determine whether a switching signaling is received from the second terminal during the period of maintaining the session, and instruct the switching unit 61 to switch the the session between the first terminal and the counterpart terminal into the session between the second terminal and the counterpart terminal if receiving the switching signaling.

The switching apparatus further includes a third determining unit 65 adapted to determine whether the second terminal is associated with the first terminal. The switching unit switches the session between the first terminal and the counterpart terminal into the session between the second terminal and the counterpart terminal when the first determining unit 62 determines the reception of the switching signaling from the second terminal and the third determining unit 65 determines the second terminal is associated with the first terminal.

The switching apparatus may further include a fourth determining unit 66 adapted to determine whether the first terminal has subscribed for the service for switching a session among terminals. The switching unit 61 switches the session between the first terminal and the counterpart terminal into the session between the second terminal and the counterpart terminal when the first determining unit determines the reception of the switching signaling from the second terminal and the fourth determining unit 66 determines the first terminal has subscribed for the service for switching a session among terminals.

It should be noted that, the units illustrated in the present embodiment are all logic units, and in practical applications, the units may be located at different physical modules or may be located at a same physical module.

In summary, in the embodiments of the present invention, during a process of a session between a first terminal and a counterpart terminal, if a switching signaling is received from a second terminal which is not originally involved in the session, the session between the first terminal and the counterpart terminal is switched to be between the second terminal and the counterpart terminal, in this way it is not necessary to interrupt the user's current call when switching the session of the user among multiple terminals.

During the process of the session between the first terminal and the counterpart terminal, if a signaling indicating on-hook is received from the first terminal, the session is maintained for a predetermined period. If a switching signaling is received from the second terminal during the period of maintaining the session, the session between the first terminal and the counterpart terminal is switched to be between the second terminal and the counterpart terminal. By performing the on-hook firstly and then performing the switching, the terminal without automatic on-hook function such as a stationary phone will not keep in the communication state after the session switching.

Termianls may be preset to be associated with the first terminal. When receiving switching information from a second terminal, it is determined whether the second terminal is associated with the first terminal. If the second terminal is associated with the first terminal, the session may be swithed to the second terminal. By predefining the terminals which are allowed to switch to, the security for switching the session may be improved.

It is firstly determined whether the first terminal has subscribed for the service for switching a session among terminals, and if the first terminal has subscribed for the service, the session may be switched to a second terminal. In this way, the user may autonomously determine whether session switching is needed in a more customized way, while the profit of the operator may be guranteed.

For a terminal which needs off-hook such as a stationary phone, the employed switching signaling may be an off-hook signaling, so that the user need not dial other access code and automatic switching may be implemented, in this way it is convenient for the user's operation. For a terminal which needs not off-hook such as a cellphone, the switching signaling may be a short access code signaling, in this way it is also convenient for the user's operation while a seamless switching may be implemented.

The present invention have been illustrated and described by way of some preferred embodiments of the present invention. However, it is to be understood that the above description does not intend to limit the present invention. Any variations may be made on the various embodiments without departing the protection scope of the present invention.

## Claims

1. A method for switching a session among terminals, **characterized by** comprising:
receiving, during a session between a first terminal and a counterpart terminal, a switching signaling from a second terminal which is not in the session; and
switching the session between the first terminal and the counterpart terminal into a session between the second terminal and the counterpart terminal.

2. The method for switching a session among terminals according to claim 1, wherein before the step of switching the session between the first terminal and the counterpart terminal into the session between the second terminal and the counterpart terminal, the method further comprises:
receiving, during the session between the first terminal and the counterpart terminal, a signaling which indicates on-hook from the first terminal;
maintaining the session for a predetermined period after the reception of the signaling which indicates on-hook; and
receiving a switching signaling from the second terminal during the period for maintaining the session.

3. The method for switching a session among terminals according to claim 1, wherein the step of switching the session between the first terminal and the counterpart terminal into the session between the second terminal and the counterpart terminal further comprises:
switching the session between the first terminal and the counterpart terminal into the session between the second terminal and the counterpart terminal after determining that the second terminal is associated with the first terminal.

4. The method for switching a session among terminals according to claim 1, wherein the step of switching the session between the first terminal and the counterpart terminal into the session between the second terminal and the counterpart terminal further comprises:
switching the session between the first terminal and the counterpart terminal into the session between the second terminal and the counterpart terminal after determining that the first terminal has subscribed for a service for swiching a session among terminals.

5. A switch, comprising:
a switching unit (51) adapted to switch a session;
a first determining unit (52) adapted to determine whether receiving, during a session between a first terminal and a counterpart terminal, a switching signaling from a second terminal which is not in the session, and instruct the switching unit to switch the session between the first terminal and the counterpart terminal into a session between the second terminal and the counterpart terminal if receiving the switching signaling.

6. The switch according to claim 5, further comprising:
a session maintaining unit (53) adapted to maintain the session for a predetermined period; and
a second determining unit (54) adapted to determine whether receiving, during the session of the first terminal, a signaling which indicates on-hook from the first terminal, and instruct the session maintaining unit to maintain the session of the first terminal for the predetermined period if receiving the signaling which indicates on-hook; wherein,
the first determining unit (52) is further adapted to determine whether receiving, during the session maintaining period, a switching signaling from the second terminal, and instruct the switching unit to switch the session between the first terminal and the counterpart terminal into the session between the second terminal and the counterpart terminal if receiving the switching signaling.

7. The switch according to claim 5, further comprising:
a third determining unit (55) adapted to determine whether the second terminal is associated with the first terminal; wherein,
the switching unit (51) is further adapted to switch the session between the first terminal and the counterpart terminal into the session between the second terminal and the counterpart terminal when the first determining unit (52) determines the reception of the switching signaling from the second terminal and the third determining unit (55) determines the second terminal is associated with the first terminal.

8. The switch according to claim 5, further comprising:
a fourth determining unit (56) adapted to determine whether the first terminal has subscribed for a service for switching a session among terminals; wherein,
the switching unit (51) is further adapted to switch the session between the first terminal and the counterpart terminal into the session between the second terminal and the counterpart terminal when the first determining unit (52) determines the reception of the switching signaling from the second terminal and the fourth determining unit (56) determines the first terminal has subscribed for the service for switching a session among terminals.

9. A switching apparatus, comprising:
a switching unit (61) adapted to switch a session; and
a first determining unit (62) adapted to determine whether receiving, during a session between a first terminal and a counterpart terminal, a switching signaling from a second terminal which is not in the session, and instruct the switching unit to switch the the session between the first terminal and the counterpart terminal into a session between the second terminal and the counterpart terminal if receiving the switching signaling.

10. The switching apparatus according to claim 9, further comprising:
a session maintaining unit (63) adapted to maintain the session for a predetermined period;
a second determining unit (64) adapted to determine whether receiving, during the session of the first terminal, a signaling which indicates on-hook from the first terminal, and instruct the session maintaining unit to maintain the session of the first terminal for the predetermined period if receiving the signaling which indicates on-hook; wherein,
the first determining unit (62) is further adapted to determine whether receiving, during the session maintaining period, a switching signaling from the second terminal, and instruct the switching unit (61) to switch the the session between the first terminal and the counterpart terminal into the session between the second terminal and the counterpart terminal if receiving the switching signaling.

11. The switching apparatus according to claim 9, further comprising:
a third determining unit (65) adapted to determine whether the second terminal is associated with the first terminal; wherein,
the switching unit (61) is further adapted to switch the session between the first terminal and the counterpart terminal into the session between the second terminal and the counterpart terminal when the first determining unit (62) determines the reception of the switching signaling from the second terminal and the third determining unit (65) determines the second terminal is associated with the first terminal.

12. The switching apparatus according to claim 9, further comprising:
a fourth determining unit (66) adapted to determine whether the first terminal has subscribed for a service for switching a session among terminals; wherein,
the switching unit (61) is furhter adapted to switch the session between the first terminal and the counterpart terminal into the session between the second terminal and the counterpart terminal when the first determining unit (62) determines the reception of the switching signaling from the second terminal and the fourth determining unit (66) determines the first terminal has subscribed for the service for switching a session among terminals.
